# EUROPEAN PATENT APPLICATION

(11) **EP 4 753 314 A1**
(43) Date of publication of application: **03.06.2026**
(21) Application number: 23946192.4
(22) Date of filing: 25.07.2023
(51) Int. Cl.: H04W 24/02

(54) **COMMUNICATION METHOD, AND AP AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/109201
(87) International publication number: WO 2025/020099

(57) **Abstract**

The embodiments of the present disclosure relate to the technical field of communications. Provided are a communication method, and an AP and a storage medium. The method comprises: determining a first radio frame, wherein the first radio frame indicates a multi-AP coordination operation capability of a first AP by means of at least one indication domain; and sending the first radio frame. The embodiments of the present disclosure can provide an indication mode for a multi-AP coordination operation capability.

## Description

### TECHNICAL FIELD

The present disclosure relates to a field of communication technologies, and in particular relates to a communication method, an AP, and a storage medium.

### BACKGROUND

A basic idea of multi-AP coordination operation is that an AP having coordination capability may coordinate other APs supporting multi-AP coordination operation through a cooperative transmission mode, so as to implement time-frequency resource sharing, implement spatial multiplexing, or implement joint transmission, thereby reducing inter-cell interference, ensuring user service quality, improving network communication rate, and reducing delay.

At present, the multi-AP coordination mechanism will be further studied, so as to improve related procedures of multi-AP coordination operation.

### SUMMARY

Embodiments of the present disclosure provide a communication method, an AP, and a storage medium, which may provide a manner for indicating a multi-AP coordination operation capability.

In a first aspect, embodiments of the present disclosure provide a communication method, the method includes:
determining a first wireless frame, where the first wireless frame indicates a multi-AP coordination operation capability of a first access point AP through at least one indication field; and
sending the first wireless frame.

In a second aspect, embodiments of the present disclosure provide a communication method, the method includes:
receiving a first wireless frame, where the first wireless frame indicates a multi-AP coordination operation capability of a first access point AP through at least one indication field.

In a third aspect, embodiments of the present disclosure provide an AP, and the AP includes:
a processing module, configured to determine a first wireless frame, where the first wireless frame indicates a multi-AP coordination operation capability of a first access point AP through at least one indication field; and
a transceiving module, configured to send the first wireless frame.

In a fourth aspect, embodiments of the present disclosure provide an AP, and the AP includes:
a transceiving module, configured to receive a first wireless frame, where the first wireless frame indicates a multi-AP coordination operation capability of a first access point AP through at least one indication field.

In a fifth aspect, embodiments of the present disclosure provide an AP, and the AP includes one or more processors;
where the AP is configured for the communication method provided in the first aspect or the second aspect of embodiments of the present disclosure.

In a sixth aspect, embodiments of the present disclosure provide a storage medium, the storage medium storing instructions, where when the instructions are executed on a communication device, the communication device is caused to perform the communication method provided in the first aspect or the second aspect of embodiments of the present disclosure.

In a seventh aspect, embodiments of the present disclosure propose a communication system, the communication system includes a first AP and a second AP; where the first AP is configured to perform the method described in the first aspect, and the second AP is configured to perform the method described in the second aspect.

Based on the communication method, the AP, and the storage medium provided by embodiments of the present disclosure, an indication manner of the multi-AP coordination operation capability may be provided.

Additional aspects and advantages of embodiments of the present disclosure will be partially given in the following description, which will become apparent from the following description, or be learned through practice of the present disclosure.

### BRIEF DESCRIPTION OF THE DRAWINGS

In order to more clearly describe the technical solutions of embodiments of the present disclosure, the accompanying drawings required to be used in the description of embodiments of the present disclosure are briefly introduced below. Obviously, the accompanying drawings in the following description are merely some embodiments of the present disclosure, and for those skilled in the art, other accompanying drawings may also be obtained based on these accompanying drawings without creative efforts.
FIG. 1 is a schematic diagram of an architecture of a communication system shown according to embodiments of the present disclosure;
FIG. 2 is a schematic interaction diagram of a communication method shown according to embodiments of the present disclosure;
FIG. 3 is a schematic flowchart of a communication method executed by a first AP shown according to embodiments of the present disclosure;
FIG. 4 is a schematic flowchart of a communication method executed by a second AP shown according to embodiments of the present disclosure;
FIG. 5a is a schematic structural diagram of an AP provided in embodiments of the present disclosure;
FIG. 5b is another schematic structural diagram of an AP provided in embodiments of the present disclosure;
FIG. 6 is a schematic structural diagram of a communication device provided according to embodiments of the present disclosure;
FIG. 7 is a schematic structural diagram of a chip provided according to embodiments of the present disclosure.

### DETAILED DESCRIPTION

Embodiments of the present disclosure propose a communication method, an AP, and a storage medium.

In a first aspect, embodiments of the present disclosure propose a communication method, the method includes:
determining a first wireless frame, where the first wireless frame indicates a multi-AP coordination operation capability of a first access point AP through at least one indication field; and
sending the first wireless frame.

In the above embodiments, the first AP may directly indicate the multi-AP coordination operation capability of the first AP through at least one indication field in the first wireless frame, which is beneficial to improving an indication procedure of the multi-AP coordination operation capability.

In combination with some embodiments of the first aspect, in some embodiments, the first wireless frame indicates the multi-AP coordination operation capability of the first AP through a first indication field and a second indication field jointly, or the first wireless frame indicates the multi-AP coordination operation capability of the first AP through a third indication field.

In the above embodiments, the first wireless frame may indicate the multi-AP coordination operation capability of the first AP in multiple manners, which is beneficial to enhancing diversification of indication manners of the multi-AP coordination operation capability.

In combination with some embodiments of the first aspect, in some embodiments, when an identification value of the first indication field is a first value and an identification value of the second indication field is a second value, the first indication field and the second indication field are used to jointly indicate that the first AP supports coordinating other APs and does not support being coordinated by other APs;
when the identification value of the first indication field is the first value and the identification value of the second indication field is the first value, the first indication field and the second indication field are used to jointly indicate that the first AP supports coordinating other APs and supports being coordinated by other APs;
when the identification value of the first indication field is the second value and the identification value of the second indication field is the first value, the first indication field and the second indication field are used to jointly indicate that the first AP does not support coordinating other APs and supports being coordinated by other APs;
when the identification value of the first indication field is the second value and the identification value of the second indication field is the second value, the first indication field and the second indication field are used to jointly indicate that the first AP does not support a multi-AP coordination operation.

In the above embodiments, the first wireless frame may jointly indicate, through different identification values of the two indication fields, whether the first AP indicates the multi-AP coordination operation, and indicate, in a case where the first AP supports the multi-AP coordination operation, a specific type of multi-AP coordination operation supported by the first AP (such as whether the first AP supports coordinating other APs, and whether the first AP supports being coordinated by other APs, and the like), which is beneficial to saving signaling resources.

In combination with some embodiments of the first aspect, in some embodiments, the first wireless frame includes an ultra-high reliability capability element field, the ultra-high reliability capability element field includes an ultra-high reliability medium access control capability field, and the ultra-high reliability medium access control capability field includes the first indication field and the second indication field.

In the above embodiments, the first wireless frame may carry the first indication field and the second indication field through the existing information field, which is beneficial to saving signaling resources.

In combination with some embodiments of the first aspect, in some embodiments, when an identification value of the third indication field is a third value, the third indication field is used to indicate that the first AP supports the multi-AP coordination operation;
when the identification value of the third indication field is a fourth value, the third indication field is used to indicate that the first AP does not support the multi-AP coordination operation.

In the above embodiments, the first wireless frame may directly indicate whether the first AP supports the multi-AP coordination operation through the third indication field, which is beneficial to enabling a second AP receiving the first wireless frame to quickly determine whether the first AP supports the multi-AP coordination operation.

In combination with some embodiments of the first aspect, in some embodiments, when the third indication field is used to indicate that the first AP supports the multi-AP coordination operation, the first wireless frame further includes a fourth indication field;
when the identification value of the fourth indication field is a fifth value, the fourth indication field is used to indicate that the first AP supports coordinating other APs and does not support being coordinated by other APs;
when the identification value of the fourth indication field is a sixth value, the fourth indication field is used to indicate that the first AP does not support coordinating other APs and supports being coordinated by other APs;
when the identification value of the fourth indication field is a seventh value, the fourth indication field is used to indicate that the first AP supports coordinating other APs and supports being coordinated by other APs.

In the above embodiments, the first wireless frame may indicate, through different identification values of the fourth indication field, a specific type of multi-AP coordination operation supported by the first AP (such as whether the first AP supports coordinating other APs, and whether the first AP supports being coordinated by other APs, and the like) in a case where the first AP supports the multi-AP coordination operation, which is beneficial to saving signaling resources and is also beneficial to enabling a second AP receiving the first wireless frame to quickly determine the multi-AP coordination operation type supported by the first AP.

In combination with some embodiments of the first aspect, in some embodiments, the first wireless frame includes a multi-AP coordination operation element field, the multi-AP coordination operation element field includes a multi-AP coordination operation control field, and the multi-AP coordination operation control field includes the third indication field.

In the above embodiments, the first wireless frame may carry the third indication field through the existing information field, which is beneficial to saving signaling resources.

In combination with some embodiments of the first aspect, in some embodiments, the first wireless frame includes a multi-AP coordination operation element field, the multi-AP coordination operation element field includes a multi-AP coordination operation parameter set field, and a multi-AP coordination operation capability field in the multi-AP coordination operation parameter set field is the fourth indication field.

In the above embodiments, the first wireless frame may carry the fourth indication field through the existing information field, which is beneficial to saving signaling resources.

In a second aspect, embodiments of the present disclosure propose a communication method, the method includes:
receiving a first wireless frame, where the first wireless frame indicates a multi-AP coordination operation capability of a first access point AP through at least one indication field.

In the above embodiments, the multi-AP coordination operation capability of the first AP may be directly indicated through at least one indication field in the first wireless frame, which is beneficial to improving an indication procedure of the multi-AP coordination operation capability.

In combination with some embodiments of the second aspect, in some embodiments, the first wireless frame indicates the multi-AP coordination operation capability of the first AP through the first indication field and the second indication field jointly, or the first wireless frame indicates the multi-AP coordination operation capability of the first AP through a third indication field.

In the above embodiments, the first wireless frame may indicate the multi-AP coordination operation capability of the first AP in multiple manners, which is beneficial to enhancing diversification of indication manners of the multi-AP coordination operation capability.

In combination with some embodiments of the second aspect, in some embodiments, when an identification value of the first indication field is a first value and an identification value of the second indication field is a second value, the first indication field and the second indication field are used to jointly indicate that the first AP supports coordinating other APs and does not support being coordinated by other APs;
when the identification value of the first indication field is the first value and the identification value of the second indication field is the first value, the first indication field and the second indication field are used to jointly indicate that the first AP supports coordinating other APs and supports being coordinated by other APs;
when the identification value of the first indication field is the second value and the identification value of the second indication field is the first value, the first indication field and the second indication field are used to jointly indicate that the first AP does not support coordinating other APs and supports being coordinated by other APs;
when the identification value of the first indication field is the second value and the identification value of the second indication field is the second value, the first indication field and the second indication field are used to jointly indicate that the first AP does not support the multi-AP coordination operation.

In the above embodiments, the first wireless frame may jointly indicate, through different identification values of the two indication fields, whether the first AP indicates multi-AP coordination operation, and indicate, in a case where the first AP supports the multi-AP coordination operation, a specific type of multi-AP coordination operation supported by the first AP (such as whether the first AP supports coordinating other APs, and whether the first AP supports being coordinated by other APs, and the like), which is beneficial to saving signaling resources.

In combination with some embodiments of the second aspect, in some embodiments, the first wireless frame includes an ultra-high reliability capability element field, the ultra-high reliability capability element field includes an ultra-high reliability medium access control capability field, and the ultra-high reliability medium access control capability field includes the first indication field and the second indication field.

In the above embodiments, the first wireless frame may carry the first indication field and the second indication field through the existing information field, which is beneficial to saving signaling resources.

In combination with some embodiments of the second aspect, in some embodiments, when an identification value of the third indication field is a third value, the third indication field is used to indicate that the first AP supports the multi-AP coordination operation;
when the identification value of the third indication field is a fourth value, the third indication field is used to indicate that the first AP does not support the multi-AP coordination operation.

In the above embodiments, the first wireless frame may directly indicate whether the first AP supports the multi-AP coordination operation through the third indication field, which is beneficial to enabling a second AP receiving the first wireless frame to quickly determine whether the first AP supports the multi-AP coordination operation.

In combination with some embodiments of the second aspect, in some embodiments, when the third indication field is used to indicate that the first AP supports the multi-AP coordination operation, the first wireless frame further includes a fourth indication field;
when an identification value of the fourth indication field is a fifth value, the fourth indication field is used to indicate that the first AP supports coordinating other APs and does not support being coordinated by other APs;
when the identification value of the fourth indication field is a sixth value, the fourth indication field is used to indicate that the first AP does not support coordinating other APs and supports being coordinated by other APs;
when the identification value of the fourth indication field is a seventh value, the fourth indication field is used to indicate that the first AP supports coordinating other APs and supports being coordinated by other APs.

In the above embodiments, the first wireless frame may indicate, through different identification values of the fourth indication field, a specific type of multi-AP coordination operation supported by the first AP in a case where the first AP supports the multi-AP coordination operation (such as whether the first AP supports coordinating other APs, and whether the first AP supports being coordinated by other APs, and the like), which is beneficial to saving signaling resources and is also beneficial to enabling a second AP receiving the first wireless frame to quickly determine the multi-AP coordination operation type supported by the first AP.

In combination with some embodiments of the second aspect, in some embodiments, the first wireless frame includes a multi-AP coordination operation element field, the multi-AP coordination operation element field includes a multi-AP coordination operation control field, and the multi-AP coordination operation control field includes the third indication field.

In the above embodiments, the first wireless frame may carry the third indication field through the existing information field, which is beneficial to saving signaling resources.

In combination with some embodiments of the second aspect, in some embodiments, the first wireless frame includes a multi-AP coordination operation element field, the multi-AP coordination operation element field includes a multi-AP coordination operation parameter set field, and a multi-AP coordination operation capability field in the multi-AP coordination operation parameter set field is the fourth indication field.

In the above embodiments, the first wireless frame may carry the fourth indication field through the existing information field, which is beneficial to saving signaling resources.

In combination with some embodiments of the second aspect, in some embodiments, the method further includes:
determining a second wireless frame, where the second wireless frame is used to initiate a multi-AP coordination request; and
sending the second wireless frame;
where the multi-AP coordination request is used to request a third AP receiving the second wireless frame to participate in multi-AP coordination and to be coordinated, or the multi-AP coordination request is used to request a second AP sending the second wireless frame to participate in multi-AP coordination and to request the third AP receiving the second wireless frame to coordinate the second AP.

In the above embodiments, the second AP may initiate the multi-AP coordination request through the second wireless frame, and the multi-AP coordination request is used to request the third AP receiving the second wireless frame to participate in multi-AP coordination and to be coordinated, or to request the second AP sending the second wireless frame to participate in multi-AP coordination and to request the third AP receiving the second wireless frame to coordinate the second AP, which is beneficial to improving an interaction procedure of the multi-AP coordination operation.

In combination with some embodiments of the second aspect, in some embodiments, the second wireless frame includes a fifth indication field, when an identification value of the fifth indication field is an eighth value, the second wireless frame is used to request the third AP to participate in multi-AP coordination and to be coordinated; when the identification value of the fifth indication field is a ninth value, the second wireless frame is used to request the second AP to participate in multi-AP coordination and to request the third AP to coordinate the second AP.

In the above embodiments, the second wireless frame may directly indicate specific request content of the multi-AP coordination request through the fifth indication field, which is beneficial to saving signaling resources and is beneficial to enabling the third AP receiving the second wireless frame to quickly determine the request content of the multi-AP coordination request.

In combination with some embodiments of the second aspect, in some embodiments, the second wireless frame includes a multi-AP coordination operation element field, the multi-AP coordination operation element field includes a multi-AP coordination operation parameter set field, the multi-AP coordination operation parameter set field includes a coordination request type subfield, and the coordination request type subfield is the fifth indication field.

In the above embodiments, the second wireless frame may reuse the existing information field as the fifth indication field, which is beneficial to saving signaling resources.

In combination with some embodiments of the second aspect, in some embodiments, the second wireless frame further includes a sixth indication field, the sixth indication field is used to indicate a first time interval for receiving a third wireless frame, and the third wireless frame is used to indicate accepting or rejecting the multi-AP coordination request.

In the above embodiments, the second wireless frame may further indicate, through the sixth indication field, a response time of the third AP which receives the second wireless frame to the second wireless frame, which is beneficial to further improving an interaction procedure of the multi-AP coordination request.

In combination with some embodiments of the second aspect, in some embodiments, the second wireless frame includes a multi-AP coordination operation element field, the multi-AP coordination operation element field includes a multi-AP coordination operation parameter set field, the multi-AP coordination operation parameter set field includes a coordination request timeout duration subfield, and the coordination request timeout duration subfield is the sixth indication field.

In the above embodiments, the second wireless frame may indicate, through the coordination request timeout duration subfield, a time interval for the third AP receiving the second wireless frame to send a third wireless frame, which is beneficial to enabling the third AP to quickly determine the time interval for sending the third wireless frame.

In combination with some embodiments of the second aspect, in some embodiments, when the third wireless frame is received within the first time interval and the third wireless frame is used to indicate accepting the multi-AP coordination request, the multi-AP coordination operation is performed with the third AP;

when the third wireless frame is not received within the first time interval, or when the third wireless frame is received within the first time interval and the third wireless frame is used to indicate rejecting the multi-AP coordination request, the multi-AP coordination operation is not performed with the third AP.

In the above embodiments, the second AP sending the second wireless frame may terminate a current multi-AP coordination procedure when the third wireless frame is not received within the first time interval, or when the third wireless frame is received within the first time interval and the third wireless frame is used to indicate rejection of the multi-AP coordination request. The second AP may perform the multi-AP coordination operation with the third AP sending the third wireless frame when the third wireless frame is received within the first time interval and the third wireless frame is used to indicate acceptance of the multi-AP coordination request. Based on this, an interaction procedure of multi-AP coordination may be further improved.

In a third aspect, embodiments of the present disclosure provide an AP, and the AP includes:
a processing module, configured to determine a first wireless frame, where the first wireless frame indicates a multi-AP coordination operation capability of a first access point AP through at least one indication field; and
a transceiving module, configured to send the first wireless frame.

In a fourth aspect, embodiments of the present disclosure provide an AP, and the AP includes:
a transceiving module, configured to receive a first wireless frame, where the first wireless frame indicates a multi-AP coordination operation capability of a first access point AP through at least one indication field.

In a fifth aspect, embodiments of the present disclosure provide an AP, and the AP includes one or more processors;
the AP is configured to perform the communication method provided as described in the first aspect, the second aspect, optional embodiments of the first aspect, and optional embodiments of the second aspect.

In a sixth aspect, embodiments of the present disclosure propose a communication system, the communication system including a first AP and a second AP; where the first AP is configured to perform the method described in the first aspect and optional embodiments of the first aspect, and the second AP is configured to perform the method described in the second aspect and optional embodiments of the second aspect.

In a seventh aspect, embodiments of the present disclosure propose a storage medium, the storage medium storing instructions, where when the instructions are executed on a communication device, the communication device is caused to perform the method described in the first aspect, the second aspect, optional embodiments of the first aspect, and optional embodiments of the second aspect.

In an eighth aspect, embodiments of the present disclosure propose a program product, where when the program product is executed by a communication device, the communication device is caused to perform the method described in the first aspect, the second aspect, optional embodiments of the first aspect, and optional embodiments of the second aspect.

In a ninth aspect, embodiments of the present disclosure propose a computer program, where when the computer program is executed on a computer, the computer is caused to perform the method described in the first aspect, the second aspect, optional embodiments of the first aspect, and optional embodiments of the second aspect.

In a tenth aspect, embodiments of the present disclosure provide a chip or a chip system. The chip or the chip system includes a processing circuit, and is configured to perform the method described in the first aspect, the second aspect, optional embodiments of the first aspect, and optional embodiments of the second aspect.

It may be understood that the above communication device, AP, communication system, storage medium, program product, computer program, chip, or chip system are all configured to perform the method provided in embodiments of the present disclosure. Therefore, beneficial effects that may be achieved thereby may refer to beneficial effects in the corresponding method, which are not described herein.

Embodiments of the present disclosure propose a communication method, an AP, and a storage medium. In some embodiments, terms such as communication method, information processing method, and communication method may be used interchangeably, terms such as communication device and information processing device may be used interchangeably, and terms such as information processing system and communication system may be used interchangeably.

The embodiments of the present disclosure are not exhaustive and are merely illustrative of some embodiments, and do not constitute a specific limitation on the protection scope of the present disclosure. In the absence of contradiction, each step in one embodiment may be implemented as an independent embodiment, and the steps may be arbitrarily combined. For example, a solution obtained by removing some steps in one embodiment may also be implemented as an independent embodiment, and the order of the steps in one embodiment may be arbitrarily exchanged. In addition, optional implementations in one embodiment may be arbitrarily combined; moreover, different embodiments may be arbitrarily combined. For example, some or all steps of different embodiments may be arbitrarily combined, and one embodiment may be arbitrarily combined with optional implementations of other embodiments.

In the embodiments of the present disclosure, in the absence of special description and logical conflict, terms and/or descriptions among the embodiments are consistent and may be mutually referenced, and technical features in different embodiments may be combined according to their inherent logical relationships to form new embodiments.

The terms used in the embodiments of the present disclosure are only for the purpose of describing specific embodiments, and are not intended to limit the present disclosure.

In the embodiments of the present disclosure, unless otherwise specified, elements expressed in the singular form, such as "one", "a/an", "the", "above", "said", "the foregoing", "this", and the like, may indicate "one and only one", and may also indicate "one or a plurality of", "at least one", and the like. For example, when articles such as "a", "an", and "the" in English are used in translation, the noun following the article may be understood as being expressed in the singular form, or may be understood as being expressed in the plural form.

In the embodiments of the present disclosure, "a plurality of" refers to two or more.

In some embodiments, terms such as "at least one of (at least one item, at least one)", "one or more", "a plurality of", and "multiple" may be used interchangeably.

In some embodiments, expressions such as "at least one of A and B", "A and/or B", "in one case A and in another case B", and "in response to one case A and in response to another case B" may, depending on the circumstances, include the following technical solutions: in some embodiments, A (A is performed independently of B); in some embodiments, B (B is performed independently of A); in some embodiments, selection from A and B (A and B are selectively performed); and in some embodiments, A and B (both A and B are performed). The same applies when there are more branches such as A, B, and C.

In some embodiments, expressions such as "A or B" may, depending on the circumstances, include the following technical solutions: in some embodiments, A (A is performed independently of B); in some embodiments, B (B is performed independently of A); and in some embodiments, selection from A and B (A and B are selectively performed). The same applies when there are more branches such as A, B, and C.

The prefixes such as "first" and "second" in the embodiments of the present disclosure are merely used to distinguish different described objects, and do not constitute limitations on the position, order, priority, quantity, or content of the described objects. Statements regarding the described objects shall refer to the descriptions in the claims or the context of the embodiments, and no redundant limitation shall be constituted due to the use of such prefixes. For example, when the described object is a "field", the ordinal numerals before "field" in "first field" and "second field" do not limit the positions or order between the "fields"; "first" and "second" do not limit whether the "fields" they modify are in the same message, nor do they limit the sequential order of the "first field" and the "second field". As another example, when the described object is a "level", the ordinal numerals before "level" in "first level" and "second level" do not limit the priority between the "levels". As another example, the quantity of the described object is not limited by the ordinal numerals, and may be one or more; taking a "first device" as an example, the quantity of the "device" may be one or more. In addition, objects modified by different prefixes may be the same or different; for example, when the described object is a "device", the "first device" and the "second device" may be the same device or different devices, and their types may be the same or different; as another example, when the described object is "information", the "first information" and the "second information" may be the same information or different information, and their contents may be the same or different.

In some embodiments, expressions such as "including A", "containing A", "configured to indicate A", and "carrying A" may be interpreted as directly carrying A, or may be interpreted as indirectly indicating A.

In some embodiments, terms such as "in response to ...", "in response to determining ... ", "in a case that ...", "upon that...", "when ...", "if ...", and "provided that ..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably, and terms such as "less than", "less than or equal to", "not greater than", "fewer than", "fewer than or equal to", "no more than", "lower than", "lower than or equal to", "not higher than", and "below" may be used interchangeably.

In some embodiments, acquisition of data, information, and the like may comply with the laws and regulations of the country where the acquisition is performed.

In some embodiments, data, information, and the like may be acquired after obtaining user consent.

In addition, each element, each row, or each column in the tables of the embodiments of the present disclosure may be implemented as an independent embodiment, and any combination of any elements, any rows, or any columns may also be implemented as an independent embodiment.

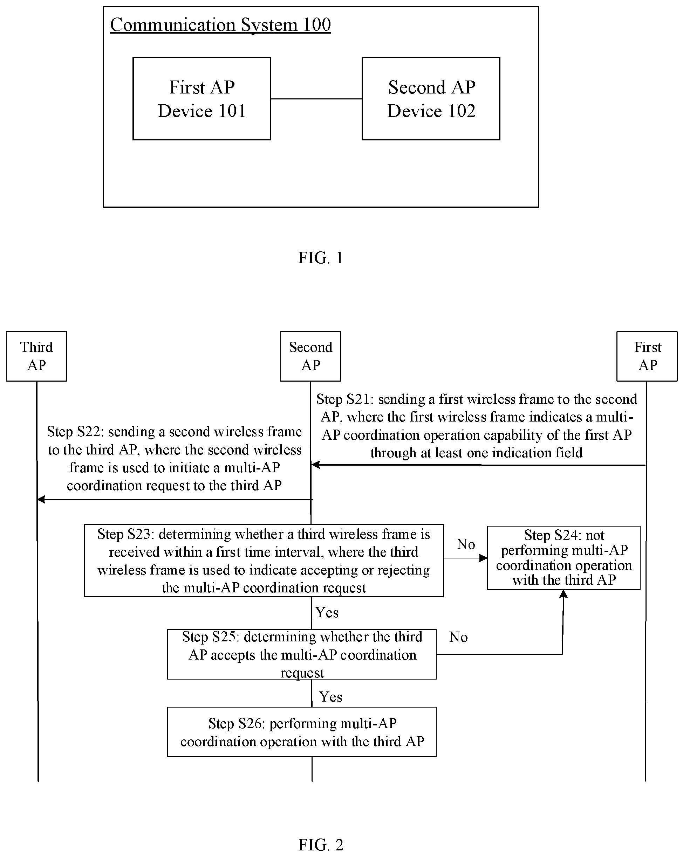

FIG. 1 is a schematic architectural diagram of a communication system according to embodiments of the present disclosure.

As shown in FIG. 1, the communication system 100 includes a first access point (AP) device 101 and a second AP 102.

In some embodiments, the first AP 101 and the second AP 102 may be access points through which the mobile terminal accesses a wired network. An AP is equivalent to a bridge connecting a wired network and a wireless network, and a main function thereof is to connect various wireless network clients together and then access the wireless network to Ethernet. Specifically, the first AP 101 and the second AP 102 may be terminal devices or network devices with wireless fidelity chips. Optionally, the first AP 101 and the second AP 102 may support a plurality of WLAN standards such as 802.11ax, 802.11be, 802.11ac, 802.11n, 802.11g, 802.11b, and 802.11a, and may also support a next-generation 802.11 protocol, but are not limited thereto.

In some embodiments, the first AP 101 and the second AP 102 may communicate with each other, and may also communicate with respective associated stations (Station, STA). The STA may be a device, a wireless sensor, or a wireless communication terminal including a wireless communication chip supporting WiFi communication functions. Optionally, the wireless communication terminal may include at least one of a mobile phone, a wearable device, an Internet of Things device supporting WiFi communication functions, a vehicle with WiFi communication functions, an intelligent vehicle, a tablet computer (Pad), a computer with wireless transceiving functions, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in remote medical surgery (remote medical surgery), a wireless terminal device in a smart grid (smart grid), a wireless terminal device in transportation safety (transportation safety), a wireless terminal device in a smart city (smart city), or a wireless terminal device in a smart home (smart home), but is not limited thereto.

Specifically, the STA may be a terminal device or a network device with a wireless fidelity (WiFi) chip. Optionally, the STA may support a plurality of WLAN standards such as 802.11 ax, 802.11be, 802.11ac, 802.11n, 802.11g, 802.11b, and 802.11a, and may also support the next-generation 802.11 protocol, but is not limited thereto.

Optionally, in the embodiments of the present disclosure, the AP and the STA may be devices supporting multi-link, for example, which may be respectively represented as an access point device supporting multi-link (Access Point Multi-Link Device, AP MLD) and a station device supporting multi-link (Non-Access Point Multi-Link Device, Non-AP MLD); the AP MLD may represent an access point supporting a multi-link communication function, and the non-AP MLD may represent a station supporting a multi-link communication function.

It should be understood that the communication system described in embodiments of the present disclosure is intended to more clearly illustrate the technical solutions of embodiments of the present disclosure, and does not constitute a limitation on the technical solutions proposed in embodiments of the present disclosure. Those skilled in the art knows that, with the evolution of system architectures and the emergence of new service scenarios, the technical solutions proposed in embodiments of the present disclosure are also applicable to similar technical problems.

The embodiments of the present disclosure described below may be applied to the communication system 100 shown in FIG. 1, or to some of the entities thereof, but are not limited thereto. The entities shown in FIG. 1 are illustrative. The communication system may include all or some of the entities in FIG. 1, or may include other entities not shown in FIG. 1. The number and forms of the entities are arbitrary. The entities may be physical entities or virtual entities. The connection relationships among the entities are illustrative. The entities may be connected or not connected. The connections may be in any manner, may be direct connections or indirect connections, and may be wired connections or wireless connections.

The embodiments of the present disclosure may be applied to a wireless local area network (WLAN), for example, may be applicable to IEEE 802.11 system standards, such as the 802.11a/b/g standard, the 802.11n standard, the 802.11ac standard, the 802.11ax standard, or a next-generation standard thereof, for example, the 802.11be standard, also referred to as Wi-Fi 7 or an extremely high-throughput (extremely high-throughput, EHT) standard, or a further next-generation standard. Alternatively, the embodiments of the present disclosure may also be applicable to wireless local area network systems such as an Internet of Things (internet of things, IoT) network or a Vehicle to X (V2X) network. Of course, the embodiments of the present disclosure may also be applicable to another possible communication system, for example, a Long Term Evolution (LTE) system, an LTE frequency division duplex (FDD) system, an LTE time division duplex (TDD) system, a Universal Mobile Telecommunication System (UMTS), a Worldwide Interoperability for Microwave Access (WiMAX) communication system, and a future fifth generation (5th generation, 5G) communication system, and the like.

In an existing 802.11 protocol, research mainly involves how to achieve higher throughput, higher data rates, and higher access efficiency within a single basic service set (BSS) or a single AP, while there is relatively little research on coordinated transmission among multiple BSSs or multiple APs. With development trends of Wi-Fi devices supporting more frequency bands and higher frequencies, and diversified demands of communication services, deployment of WLAN devices is becoming increasingly dense. Increasingly dense APs bring more inter-cell interference and also increase a risk of access conflicts. In order to further improve user service quality and overall network performance, a next-generation Wi-Fi standard research group UHR, while pursuing improvements in communication rate, communication delay, reliability, and the like within a single BSS, also focuses on coordination among multiple APs. Through cooperative collaboration among multiple APs, the communication resource allocation may be made more reasonable, communication quality may be ensured while access efficiency is improved, and more optimal network performance may be achieved.

In a WLAN, the BSS is a basic component of a WLAN. A BSS network is composed of devices having a certain association within a specific coverage area. One form of association is that STAs directly communicate with each other in an ad hoc network, which is referred to as an independent basic service set (IBSS). Another more common form is that there is only one central station with dedicated management of the BSS in the BSS network, which is referred to as an AP, and the BSS network includes at least one STA associated with the AP.

A basic idea of multi-AP coordination operation is that an AP having coordination capability may coordinate neighboring APs (supporting multi-AP coordination) through a cooperative transmission mode, so as to implement time-frequency resource sharing, implement spatial multiplexing, or implement joint transmission, thereby achieving purposes of reducing inter-cell interference, ensuring user service quality, improving network communication rate, and reducing delay. On the other hand, multi-AP coordination is based on willingness of an AP itself, and not all APs are willing to be coordinated. For example, people do not want their own APs to be controlled or coordinated by neighboring APs.

Multi-AP coordinated transmission has garnered significant attention, but how to identify an AP with the multi-AP coordination capability, how to establish the multi-AP coordination transmission, and how to manage the multi-AP coordination transmission have not yet been clearly defined. Therefore, a method and process for multi-AP coordination transmission are needed to be standardized.

The technical solutions in embodiments of the present disclosure will be further described clearly and completely below in conjunction with the accompanying drawings. Apparently, the described embodiments are merely some embodiments of the present disclosure rather than all embodiments. Based on embodiments of the present disclosure, all other embodiments obtained by those skilled in the art without creative efforts shall fall within the protection scope of the present disclosure.

FIG. 2 is a schematic interaction diagram of a communication method shown according to embodiments of the present disclosure. As shown in FIG. 2, the method includes:
step S21: a first AP sends a first wireless frame to a second AP, where the first wireless frame indicates a multi-AP coordination operation capability of the first AP through at least one indication field.

In some embodiments, the first AP may send the first wireless frame to a neighboring AP in a broadcast manner, and the first AP may inform the neighboring AP about the multi-AP coordination operation capability of the first AP through the first wireless frame.

Optionally, the second AP is a neighboring AP of the first AP.

In some embodiments, the first wireless frame may indicate the multi-AP coordination operation capability of the first AP through a combination of a first indication field and a second indication field.

Optionally, the first indication field includes at least one bit, and the first indication field may be an identification bit for supporting multi-AP coordination operation mode 1 (M-AP Coordination Operation Mode 1).

Optionally, the second indication field includes at least one bit, and the second indication field may be an identification bit for supporting multi-AP coordination operation mode 2 (M-AP Coordination Operation Mode 2).

Optionally, the first wireless frame may be a Beacon frame.

In some embodiments, when an identification value of the first indication field is a first value and an identification value of the second indication field is a second value, the first indication field and the second indication field are used to jointly indicate that, in a case where the first AP supports the multi-AP coordination operation, the first AP supports coordinating other APs and does not support being coordinated by other APs.

Alternatively, when the identification value of the first indication field is the first value and the second indication field is empty, the first indication field and the second indication field are used to jointly indicate that, in a case where the first AP supports the multi-AP coordination operation, the first AP supports coordinating other APs and does not support being coordinated by other APs.

That is, in this case, the first indication field and the second indication field are used to jointly indicate that the first AP supports coordinating other APs, but the first AP does not allow other APs to coordinate the first AP.

When the identification value of the first indication field is a second value and the identification value of the second indication field is a first value, the first indication field and the second indication field are used to jointly indicate that, in a case where the first AP supports the multi-AP coordination operation, the first AP does not support coordinating other APs and supports being coordinated by other APs.

Alternatively, when the first indication field is empty and the identification value of the second indication field is the first value, the first indication field and the second indication field are used to jointly indicate that, in a case where the first AP supports the multi-AP coordination operation, the first AP does not support coordinating other APs and supports being coordinated by other APs.

That is, in this case, the first indication field and the second indication field are used to jointly indicate that the first AP does not support coordinating other APs, but allows other APs to coordinate the first AP.

When the identification value of the first indication field is a first value and the identification value of the second indication field is a first value, the first indication field and the second indication field are used to jointly indicate that, in a case where the first AP supports the multi-AP coordination operation, the first AP supports coordinating other APs and supports being coordinated by other APs.

That is, in this case, the first indication field and the second indication field are used to jointly indicate that the first AP supports coordinating other APs and allows other APs to coordinate the first AP.

When the identification value of the first indication field is a second value and the identification value of the second indication field is a second value, the first indication field and the second indication field are used to jointly indicate that the first AP does not support the multi-AP coordination operation, that is, are used to indicate that the first AP does not support coordinating other APs and does not allow other APs to coordinate the first AP.

The first value and the second value are different values. For example, the first value may be 1 and the second value may be 0, which is not limited herein.

In some embodiments, the first wireless frame includes an ultra-high reliability medium access control capability (UHR MAC Capabilities) field, and the ultra-high reliability medium access control capability (UHR MAC Capabilities) field includes the first indication field and the second indication field.

As an example, the first wireless frame includes an ultra-high reliability medium access control capability (UHR MAC Capabilities) field, and the ultra-high reliability medium access control capability (UHR MAC Capabilities) field includes an identification bit for supporting the multi-AP coordination operation mode 1 (M-AP Coordination Operation Mode 1) and an identification bit for supporting the multi-AP coordination operation mode 2 (M-AP Coordination Operation Mode 2).

In some embodiments, the first wireless frame includes an ultra-high reliability capability element (UHR Capabilities element) field, the ultra-high reliability capability element (UHR Capabilities element) field includes an ultra-high reliability medium access control capability (UHR MAC Capabilities) field, and the ultra-high reliability medium access control capability (UHR MAC Capabilities) field includes the first indication field and the second indication field.

As an example, the first wireless frame includes an ultra-high reliability capability element (UHR Capabilities element) field, the ultra-high reliability capability element (UHR Capabilities element) field includes an ultra-high reliability medium access control capability (UHR MAC Capabilities) field, and the ultra-high reliability medium access control capability (UHR MAC Capabilities) field includes an identification bit for supporting the multi-AP coordination operation mode 1 (M-AP Coordination Operation Mode 1) and an identification bit for supporting the multi-AP coordination operation mode 2 (M-AP Coordination Operation Mode 2).

In some embodiments, the first wireless frame may indicate the multi-AP coordination operation capability of the first AP through a third indication field.

Optionally, when an identification value of the third indication field is a third value, the third indication field is used to indicate that the first AP supports the multi-AP coordination operation; when the identification value of the third indication field is a fourth value, the third indication field is used to indicate that the first AP does not support the multi-AP coordination operation.

The third value and the fourth value are different values. For example, the third value may be 1 and the fourth value may be 0, which is not limited herein.

Optionally, the third indication field includes at least one bit.

Optionally, the third indication field may be a multi-AP coordination operation support identification bit.

In some embodiments, when the first wireless frame includes the third indication field and when an identification value of the third indication field is a first value, that is, when the third indication field is used to indicate that the first AP supports the multi-AP coordination operation, the first wireless frame further includes a fourth indication field.

Optionally, the fourth indication field includes at least one bit.

Optionally, when the first wireless frame includes the third indication field and the identification value of the third indication field is a second value, that is, when the third indication field is used to indicate that the first AP does not support the multi-AP coordination operation, the first wireless frame does not include the fourth indication field.

When an identification value of the fourth indication field is a fifth value, the fourth indication field is used to indicate that, in a case where the first AP supports the multi-AP coordination operation, the first AP supports coordinating other APs and does not support being coordinated by other APs.

That is, in this case, the fourth indication field is used to indicate that the first AP supports coordinating other APs, but does not allow other APs to coordinate the first AP.

When the identification value of the fourth indication field is a sixth value, the fourth indication field is used to indicate that, in a case where the first AP supports the multi-AP coordination operation, the first AP does not support coordinating other APs and supports being coordinated by other APs.

That is, in this case, the fourth indication field is used to indicate that the first AP does not support coordinating other APs, but allows other APs to coordinate the first AP.

When the identification value of the fourth indication field is a seventh value, the fourth indication field is used to indicate that, in a case where the first AP supports the multi-AP coordination operation, the first AP supports coordinating other APs and supports being coordinated by other APs.

That is, in this case, the fourth indication field is used to indicate that the first AP supports coordinating other APs and allows other APs to coordinate the first AP.

The fifth value, the sixth value, and the seventh value are different values. For example, the fifth value, the sixth value, and the seventh value may be 1, 2, and 3, respectively, which is not limited herein.

In some embodiments, the first wireless frame includes a multi-AP coordination operation control (M-AP Coordination Operation Control) field, and the multi-AP coordination operation control (M-AP Coordination Operation Control) field includes the third indication field.

Optionally, the third indication field may be a multi-AP coordination support (M-AP Coordination Support) identification bit.

As an example, the first wireless frame includes a multi-AP coordination operation control (M-AP Coordination Operation Control) field, and the multi-AP coordination operation control (M-AP Coordination Operation Control) field includes a multi-AP coordination support (M-AP Coordination Support) identification bit.

In some embodiments, the first wireless frame includes an AP coordination operation element (M-AP Coordination Operation element) field, the AP coordination operation element (M-AP Coordination Operation element) field includes a multi-AP coordination operation control (M-AP Coordination Operation Control) field, and the multi-AP coordination operation control (M-AP Coordination Operation Control) field includes the third indication field.

Optionally, the third indication field may be a multi-AP coordination support (M-AP Coordination Support) identification bit.

As an example, the first wireless frame includes an AP coordination operation element (M-AP Coordination Operation element) field, the AP coordination operation element (M-AP Coordination Operation element) field includes a multi-AP coordination operation control (M-AP Coordination Operation Control) field, and the multi-AP coordination operation control (M-AP Coordination Operation Control) field includes a multi-AP coordination support (M-AP Coordination Support) identification bit.

In some embodiments, the first wireless frame includes a multi-AP coordination operation parameter set (M-AP Coordination Operation Parameter Set) field, and the multi-AP coordination operation parameter set (M-AP Coordination Operation Parameter Set) field includes the fourth indication field.

Optionally, the fourth indication field may be any one information field or at least one bit in the multi-AP coordination operation parameter set (M-AP Coordination Operation Parameter Set). For example, the fourth indication field may be a multi-AP coordination operation capability (M-AP Coordination Capabilities) field in the multi-AP coordination operation parameter set (M-AP Coordination Operation Parameter Set) field.

In some embodiments, the first wireless frame includes a multi-AP coordination operation element (M-AP Coordination Operation element) field, the multi-AP coordination operation element (M-AP Coordination Operation element) field includes a multi-AP coordination operation parameter set (M-AP Coordination Operation Parameter Set) field, and a multi-AP coordination operation capability (M-AP Coordination Capabilities) field in the multi-AP coordination operation parameter set (M-AP Coordination Operation Parameter Set) field is the fourth indication field.

Step S22: the second AP sends a second wireless frame to a third AP, where the second wireless frame is used to initiate a multi-AP coordination request to the third AP.

In some embodiments, the second AP may receive the first wireless frame sent by at least one AP, and determine a multi-AP coordination operation capability of each AP sending the first wireless frame based on the first wireless frame.

Further, the second AP may send the second wireless frame to a neighboring AP according to a multi-AP coordination operation capability of the second AP and a multi-AP coordination operation capability of the neighboring AP, so as to initiate a multi-AP coordination request to the neighboring AP.

Optionally, the third AP is a neighboring AP of the second AP.

Optionally, the third AP may be the first AP.

Optionally, when the second AP supports the multi-AP coordination operation and supports coordinating other APs, the second AP may send the second wireless frame to a third AP that supports the multi-AP coordination operation and supports being coordinated by other APs. The second wireless frame is used to initiate the multi-AP coordination request to the third AP, and in this case, the multi-AP coordination request is used to request the third AP receiving the second wireless frame to participate in the multi-AP coordination and is used to request coordinating the third AP.

Optionally, when the second AP supports the multi-AP coordination operation and supports being coordinated by other APs, the second AP may send the second wireless frame to a third AP that supports the multi-AP coordination operation and supports coordinating other APs. The second wireless frame is used to initiate a multi-AP coordination request to the third AP, and in this case, the multi-AP coordination request is used to request the second AP sending the second wireless frame to participate in the multi-AP coordination and is used to request the third AP receiving the second wireless frame to coordinate the second AP.

In some embodiments, the second wireless frame includes a fifth indication field. When an identification value of the fifth indication field is an eighth value, the second wireless frame is used to request the third AP to participate in the multi-AP coordination and to request coordinating the third AP; when the identification value of the fifth indication field is a ninth value, the second wireless frame is used to request the second AP to participate in the multi-AP coordination and to request the third AP to coordinate the second AP.

Where, the eighth value and the ninth value are different values. For example, the eighth value may be 0 and the ninth value may be 1, which is not limited herein.

In some embodiments, the second wireless frame includes a multi-AP coordination operation parameter set (M-AP Coordination Operation Parameter Set) field, and the multi-AP coordination operation parameter set (M-AP Coordination Operation Parameter Set) field includes the fifth indication field.

The fifth indication field may be any information field or at least one bit of the multi-AP coordination operation parameter set (M-AP Coordination Operation Parameter Set) field.

Optionally, the second wireless frame includes a multi-AP coordination operation parameter set (M-AP Coordination Operation Parameter Set) field, the multi-AP coordination operation parameter set (M-AP Coordination Operation Parameter Set) field includes a coordination request type (Coordination Request Type) subfield, and the coordination request type (Coordination Request Type) subfield is the fifth indication field.

In some embodiments, the second wireless frame includes a multi-AP coordination operation element (M-AP Coordination Operation element) field, the multi-AP coordination operation element (M-AP Coordination Operation element) field includes a multi-AP coordination operation parameter set (M-AP Coordination Operation Parameter Set) field, and the coordination request type subfield in the multi-AP coordination operation parameter set (M-AP Coordination Operation Parameter Set) field is the fifth indication field.

In some embodiments, the second wireless frame further includes a sixth indication field, the sixth indication field is used to indicate a first time interval for receiving a third wireless frame, and the third wireless frame is used to indicate acceptance or rejection of the multi-AP coordination request initiated by the second wireless frame.

The third wireless frame is sent by the third AP and is used to respond to the second wireless frame, and is specifically used to indicate acceptance or rejection of the multi-AP coordination request initiated by the second wireless frame.

The first time interval is a time interval in which the second AP expects the third AP to send back the third wireless frame.

Optionally, the sixth indication field may include at least one bit.

As an example, the sixth indication field may be a coordination request timeout (Coordination Request Timeout) subfield.

Optionally, the second wireless frame includes a multi-AP coordination operation parameter set (M-AP Coordination Operation Parameter Set) field, and the multi-AP coordination operation parameter set (M-AP Coordination Operation Parameter Set) field includes the sixth indication field.

The sixth indication field may be any information field or at least one bit of the multi-AP coordination operation parameter set (M-AP Coordination Operation Parameter Set) field.

Optionally, the second wireless frame includes a multi-AP coordination operation parameter set (M-AP Coordination Operation Parameter Set) field, the multi-AP coordination operation parameter set (M-AP Coordination Operation Parameter Set) field includes a coordination request timeout (Coordination Request Timeout) subfield, and the coordination request timeout (Coordination Request Timeout) subfield is the sixth indication field.

In some embodiments, the second wireless frame includes a multi-AP coordination operation element (M-AP Coordination Operation element) field, the multi-AP coordination operation element (M-AP Coordination Operation element) field includes a multi-AP coordination operation parameter set (M-AP Coordination Operation Parameter Set) field, and the coordination request timeout (Coordination Request Timeout) subfield in the multi-AP coordination operation parameter set (M-AP Coordination Operation Parameter Set) field is the sixth indication field.

Step S23: the second AP determines whether a third wireless frame is received within the first time interval, where the third wireless frame is used to indicate accepting or rejecting the multi-AP coordination request.

After sending the second wireless frame, the second AP may determine whether a third wireless frame, sent by the third AP and used to respond to the multi-AP coordination request initiated by the second wireless frame, is received within the first time interval.

The third AP is an AP receiving the second wireless frame.

The third wireless frame is used to indicate accepting or rejecting the multi-AP coordination request.

The third wireless frame may indicate accepting or rejecting the multi-AP coordination request through a seventh indication field.

As an example, when an identification value of the seventh indication field is a tenth value, the third wireless frame is used to indicate accepting the multi-AP coordination request; when the identification value of the seventh indication field is an eleventh value, the third wireless frame is used to indicate rejecting the multi-AP coordination request.

The tenth value and the eleventh value may be different values. For example, the tenth value may be 1 and the eleventh value may be 0, which is not limited herein.

Optionally, the third wireless frame may be a Beacon frame.

Optionally, the seventh indication field may be any information field or at least one bit in the third wireless frame.

If the second AP determines that the third wireless frame is not received within the first time interval, step S24 is performed; if the second AP determines that the third wireless frame is received within the first time interval, step S25 is performed.

Step S24: the second AP does not perform the multi-AP coordination operation with the third AP.

Step S25: the second AP determines whether the third AP accepts the multi-AP coordination request.

In some embodiments, if the second AP determines, according to the third wireless frame, that the third AP rejects the multi-AP coordination request, that is, the second AP determines that the third wireless frame is used to indicate rejecting the multi-AP coordination request initiated by the second AP, the second AP then performs step S24.

In some embodiments, if the second AP determines, according to the third wireless frame, that the third AP accepts the multi-AP coordination request, that is, the second AP determines that the third wireless frame is used to indicate accepting the multi-AP coordination request initiated by the second AP, the second AP then performs step S26.

Step S26: the second AP performs the multi-AP coordination operation with the third AP.

The communication method involved in embodiments of the present disclosure may include the foregoing steps and at least one of the embodiments. For example, any one of step S21 or step S22 may be implemented as an independent embodiment, and steps S22 to S26 may be implemented as an independent embodiment, but are not limited thereto.

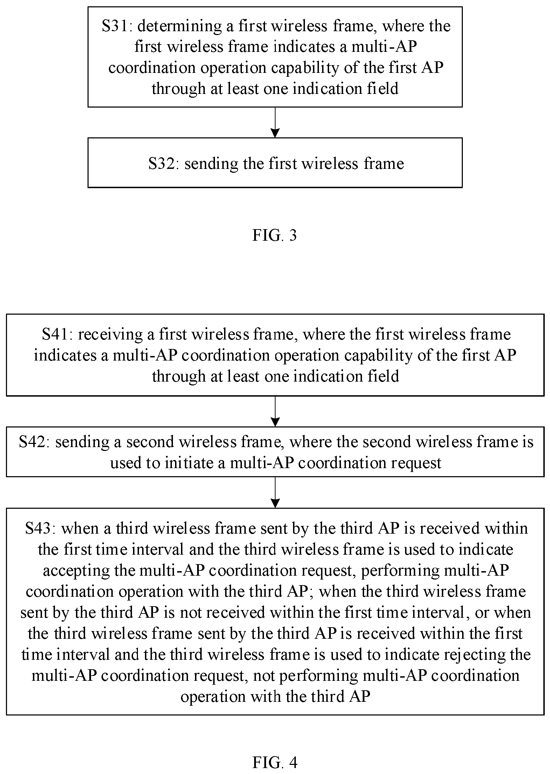

FIG. 3 is a schematic flowchart of a communication method executed by a first AP shown according to embodiments of the present disclosure. As shown in FIG. 3, the method includes:
Step S31: a wireless frame is determined, where a first wireless frame indicates a multi-AP coordination operation capability of the first AP through at least one indication field.

In some embodiments, the first wireless frame may indicate the multi-AP coordination operation capability of the first AP through a combination of a first indication field and a second indication field.

Optionally, the first indication field includes at least one bit, and the first indication field may be an identification bit for supporting multi-AP coordination operation mode 1 (M-AP Coordination Operation Mode 1).

Optionally, the second indication field includes at least one bit, and the second indication field may be an identification bit for supporting multi-AP coordination operation mode 2 (M-AP Coordination Operation Mode 2).

Optionally, the first wireless frame may be a Beacon frame.

In some embodiments, when an identification value of the first indication field is a first value and an identification value of the second indication field is a second value, the first indication field and the second indication field are used to jointly indicate that, in a case where the first AP supports the multi-AP coordination operation, the first AP supports coordinating other APs and does not support being coordinated by other APs.

Alternatively, when the identification value of the first indication field is the first value and the second indication field is empty, the first indication field and the second indication field are used to jointly indicate that, in a case where the first AP supports the multi-AP coordination operation, the first AP supports coordinating other APs and does not support being coordinated by other APs.

That is, in this case, the first indication field and the second indication field are used to jointly indicate that the first AP supports coordinating other APs, but the first AP does not allow other APs to coordinate the first AP.

When the identification value of the first indication field is a second value and the identification value of the second indication field is a first value, the first indication field and the second indication field are used to jointly indicate that, in a case where the first AP supports the multi-AP coordination operation, the first AP does not support coordinating other APs and supports being coordinated by other APs.

Alternatively, when the first indication field is empty and the identification value of the second indication field is the first value, the first indication field and the second indication field are used to jointly indicate that, in a case where the first AP supports the multi-AP coordination operation, the first AP does not support coordinating other APs and supports being coordinated by other APs.

That is, in this case, the first indication field and the second indication field are used to jointly indicate that the first AP does not support coordinating other APs, but allows other APs to coordinate the first AP.

When the identification value of the first indication field is a first value and the identification value of the second indication field is a first value, the first indication field and the second indication field are used to jointly indicate that, in a case where the first AP supports the multi-AP coordination operation, the first AP supports coordinating other APs and supports being coordinated by other APs.

That is, in this case, the first indication field and the second indication field are used to jointly indicate that the first AP supports coordinating other APs and allows other APs to coordinate the first AP.

When the identification value of the first indication field is a second value and the identification value of the second indication field is a second value, the first indication field and the second indication field are used to jointly indicate that the first AP does not support the multi-AP coordination operation, that is, are used to indicate that the first AP does not support coordinating other APs and does not allow other APs to coordinate the first AP.

The first value and the second value are different values. For example, the first value may be 1 and the second value may be 0, which is not limited herein.

In some embodiments, the first wireless frame includes an ultra-high reliability medium access control capability (UHR MAC Capabilities) field, and the ultra-high reliability medium access control capability (UHR MAC Capabilities) field includes the first indication field and the second indication field.

As an example, the first wireless frame includes an ultra-high reliability medium access control capability (UHR MAC Capabilities) field, and the ultra-high reliability medium access control capability (UHR MAC Capabilities) field includes an identification bit for supporting the multi-AP coordination operation mode 1 (M-AP Coordination Operation Mode 1) and an identification bit for supporting the multi-AP coordination operation mode 2 (M-AP Coordination Operation Mode 2).

In some embodiments, the first wireless frame includes an ultra-high reliability capability element (UHR Capabilities element) field, the ultra-high reliability capability element (UHR Capabilities element) field includes an ultra-high reliability medium access control capability (UHR MAC Capabilities) field, and the ultra-high reliability medium access control capability (UHR MAC Capabilities) field includes the first indication field and the second indication field.

As an example, the first wireless frame includes an ultra-high reliability capability element (UHR Capabilities element) field, the ultra-high reliability capability element (UHR Capabilities element) field includes an ultra-high reliability medium access control capability (UHR MAC Capabilities) field, and the ultra-high reliability medium access control capability (UHR MAC Capabilities) field includes an identification bit for supporting the multi-AP coordination operation mode 1 (M-AP Coordination Operation Mode 1) and an identification bit for supporting the multi-AP coordination operation mode 2 (M-AP Coordination Operation Mode 2).

In some embodiments, the first wireless frame may indicate the multi-AP coordination operation capability of the first AP through a third indication field.

Optionally, when an identification value of the third indication field is a third value, the third indication field is used to indicate that the first AP supports the multi-AP coordination operation; when the identification value of the third indication field is a fourth value, the third indication field is used to indicate that the first AP does not support the multi-AP coordination operation.

The third value and the fourth value are different values. For example, the third value may be 1 and the fourth value may be 0, which is not limited herein.

Optionally, the third indication field includes at least one bit.

Optionally, the third indication field may be a multi-AP coordination operation support identification bit.

In some embodiments, when the first wireless frame includes the third indication field and when an identification value of the third indication field is a first value, that is, when the third indication field is used to indicate that the first AP supports the multi-AP coordination operation, the first wireless frame further includes a fourth indication field.

Optionally, the fourth indication field includes at least one bit.

Optionally, when the first wireless frame includes the third indication field and the identification value of the third indication field is a second value, that is, when the third indication field is used to indicate that the first AP does not support the multi-AP coordination operation, the first wireless frame does not include the fourth indication field.

When an identification value of the fourth indication field is a fifth value, the fourth indication field is used to indicate that, in a case where the first AP supports the multi-AP coordination operation, the first AP supports coordinating other APs and does not support being coordinated by other APs.

That is, in this case, the fourth indication field is used to indicate that the first AP supports coordinating other APs, but does not allow other APs to coordinate the first AP.

When the identification value of the fourth indication field is a sixth value, the fourth indication field is used to indicate that, in a case where the first AP supports the multi-AP coordination operation, the first AP does not support coordinating other APs and supports being coordinated by other APs.

That is, in this case, the fourth indication field is used to indicate that the first AP does not support coordinating other APs, but allows other APs to coordinate the first AP.

When the identification value of the fourth indication field is a seventh value, the fourth indication field is used to indicate that, in a case where the first AP supports the multi-AP coordination operation, the first AP supports coordinating other APs and supports being coordinated by other APs.

That is, in this case, the fourth indication field is used to indicate that the first AP supports coordinating other APs and allows other APs to coordinate the first AP.

The fifth value, the sixth value, and the seventh value are different values. For example, the fifth value, the sixth value, and the seventh value may be 1, 2, and 3, respectively, which is not limited herein.

In some embodiments, the first wireless frame includes a multi-AP coordination operation control (M-AP Coordination Operation Control) field, and the multi-AP coordination operation control (M-AP Coordination Operation Control) field includes the third indication field.

Optionally, the third indication field may be a multi-AP coordination support (M-AP Coordination Support) identification bit.

As an example, the first wireless frame includes a multi-AP coordination operation control (M-AP Coordination Operation Control) field, and the multi-AP coordination operation control (M-AP Coordination Operation Control) field includes a multi-AP coordination support (M-AP Coordination Support) identification bit.

In some embodiments, the first wireless frame includes an AP coordination operation element (M-AP Coordination Operation element) field, the AP coordination operation element (M-AP Coordination Operation element) field includes a multi-AP coordination operation control (M-AP Coordination Operation Control) field, and the multi-AP coordination operation control (M-AP Coordination Operation Control) field includes the third indication field.

Optionally, the third indication field may be a multi-AP coordination support (M-AP Coordination Support) identification bit.

As an example, the first wireless frame includes an AP coordination operation element (M-AP Coordination Operation element) field, the AP coordination operation element (M-AP Coordination Operation element) field includes a multi-AP coordination operation control (M-AP Coordination Operation Control) field, and the multi-AP coordination operation control (M-AP Coordination Operation Control) field includes a multi-AP coordination support (M-AP Coordination Support) identification bit.

In some embodiments, the first wireless frame includes a multi-AP coordination operation parameter set (M-AP Coordination Operation Parameter Set) field, and the multi-AP coordination operation parameter set (M-AP Coordination Operation Parameter Set) field includes the fourth indication field.

Optionally, the fourth indication field may be any one information field or at least one bit in the multi-AP coordination operation parameter set (M-AP Coordination Operation Parameter Set). For example, the fourth indication field may be a multi-AP coordination operation capability (M-AP Coordination Capabilities) field in the multi-AP coordination operation parameter set (M-AP Coordination Operation Parameter Set) field.

In some embodiments, the first wireless frame includes a multi-AP coordination operation element (M-AP Coordination Operation element) field, the multi-AP coordination operation element (M-AP Coordination Operation element) field includes a multi-AP coordination operation parameter set (M-AP Coordination Operation Parameter Set) field, and a multi-AP coordination operation capability (M-AP Coordination Capabilities) field in the multi-AP coordination operation parameter set (M-AP Coordination Operation Parameter Set) field is the fourth indication field.

Step S32: the first wireless frame is sent.

In some embodiments, the first AP may send the first wireless frame to a neighboring AP in a broadcast manner, and the first AP may inform the neighboring AP about the multi-AP coordination operation capability of the first AP through the first wireless frame.

Optionally, the first AP may send the first wireless frame to an AP in a process of communicating with the AP, so as to inform the AP of the multi-AP coordination operation capability of the first AP.

FIG. 4 is a schematic flowchart of a communication method executed by a second AP shown according to embodiments of the present disclosure. As shown in FIG. 4, the method includes:

Step S41: a first wireless frame is received, where the first wireless frame indicates a multi-AP coordination operation capability of a first AP through at least one indication field.

In some embodiments, the first wireless frame is sent by the first AP and is used to indicate the multi-AP coordination operation capability of the first AP through at least one indication field.

Related content of the first wireless frame may refer to related descriptions of step S31 in FIG. 3, which is not described herein.

In some embodiments, the second AP may be a neighboring AP of the first AP. The first AP may send the first wireless frame to its neighboring AP in a broadcast manner, and the second AP, as a neighboring AP of the first AP, may receive the first wireless frame broadcast by the first AP.

Optionally, the second AP may receive the first wireless frame sent to the second AP by the first AP in a process of communicating with the first AP.

Step S42: a second wireless frame is sent, where the second wireless frame is used to initiate a multi-AP coordination request.

In some embodiments, the second AP may send the second wireless frame to a neighboring AP, and the second wireless frame is used to initiate a multi-AP coordination request.

The AP receiving the second wireless frame is a third AP, that is, the second AP may initiate a multi-AP coordination request to the third AP receiving the second wireless frame through the second wireless frame.

The second AP may send the second wireless frame to a neighboring AP according to a multi-AP coordination operation capability of the neighboring AP and a multi-AP coordination operation capability of the second AP.

The second AP may determine the multi-AP coordination operation capability of the neighboring AP according to a first wireless frame sent by the neighboring AP, or the second AP may determine the same through another manner, such as based on the preconfigured information of the neighboring AP, which is not limited herein.

Optionally, when the second AP supports the multi-AP coordination operation and supports coordinating other APs, the second AP may send the second wireless frame to a third AP that supports the multi-AP coordination operation and supports being coordinated by other APs. The second wireless frame is used to initiate the multi-AP coordination request to the third AP, and in this case, the multi-AP coordination request is used to request the third AP receiving the second wireless frame to participate in the multi-AP coordination and is used to request coordinating the third AP.

Optionally, when the second AP supports the multi-AP coordination operation and supports being coordinated by other APs, the second AP may send the second wireless frame to a third AP that supports the multi-AP coordination operation and supports coordinating other APs. The second wireless frame is used to initiate a multi-AP coordination request to the third AP, and in this case, the multi-AP coordination request is used to request the second AP sending the second wireless frame to participate in the multi-AP coordination and is used to request the third AP receiving the second wireless frame to coordinate the second AP.

In some embodiments, the second wireless frame includes a fifth indication field. When an identification value of the fifth indication field is an eighth value, the second wireless frame is used to request the third AP to participate in the multi-AP coordination and to request coordinating the third AP; when the identification value of the fifth indication field is a ninth value, the second wireless frame is used to request the second AP to participate in the multi-AP coordination and to request the third AP to coordinate the second AP.

Where, the eighth value and the ninth value are different values. For example, the eighth value may be 0 and the ninth value may be 1, which is not limited herein.

In some embodiments, the second wireless frame includes a multi-AP coordination operation parameter set (M-AP Coordination Operation Parameter Set) field, and the multi-AP coordination operation parameter set (M-AP Coordination Operation Parameter Set) field includes the fifth indication field.

The fifth indication field may be any information field or at least one bit of the multi-AP coordination operation parameter set (M-AP Coordination Operation Parameter Set) field.

Optionally, the second wireless frame includes a multi-AP coordination operation parameter set (M-AP Coordination Operation Parameter Set) field, the multi-AP coordination operation parameter set (M-AP Coordination Operation Parameter Set) field includes a coordination request type (Coordination Request Type) subfield, and the coordination request type (Coordination Request Type) subfield is the fifth indication field.

In some embodiments, the second wireless frame includes a multi-AP coordination operation element (M-AP Coordination Operation element) field, the multi-AP coordination operation element (M-AP Coordination Operation element) field includes a multi-AP coordination operation parameter set (M-AP Coordination Operation Parameter Set) field, and the coordination request type subfield in the multi-AP coordination operation parameter set (M-AP Coordination Operation Parameter Set) field is the fifth indication field.

In some embodiments, the second wireless frame further includes a sixth indication field, the sixth indication field is used to indicate a first time interval for receiving a third wireless frame, and the third wireless frame is used to indicate acceptance or rejection of the multi-AP coordination request initiated by the second wireless frame.

The third wireless frame is sent by the third AP and is used to respond to the second wireless frame, and is specifically used to indicate acceptance or rejection of the multi-AP coordination request initiated by the second wireless frame.

The first time interval is a time interval in which the second AP expects the third AP, receiving the second wireless frame, to send back the third wireless frame.

Optionally, the sixth indication field may include at least one bit.

As an example, the sixth indication field may be a coordination request timeout (Coordination Request Timeout) subfield.

Optionally, the second wireless frame includes a multi-AP coordination operation parameter set (M-AP Coordination Operation Parameter Set) field, and the multi-AP coordination operation parameter set (M-AP Coordination Operation Parameter Set) field includes the sixth indication field.

The sixth indication field may be any information field or at least one bit of the multi-AP coordination operation parameter set (M-AP Coordination Operation Parameter Set) field.

Optionally, the second wireless frame includes a multi-AP coordination operation parameter set (M-AP Coordination Operation Parameter Set) field, the multi-AP coordination operation parameter set (M-AP Coordination Operation Parameter Set) field includes a coordination request timeout (Coordination Request Timeout) subfield, and the coordination request timeout (Coordination Request Timeout) subfield is the sixth indication field.

In some embodiments, the second wireless frame includes a multi-AP coordination operation element (M-AP Coordination Operation element) field, the multi-AP coordination operation element (M-AP Coordination Operation element) field includes a multi-AP coordination operation parameter set (M-AP Coordination Operation Parameter Set) field, and the coordination request timeout (Coordination Request Timeout) subfield in the multi-AP coordination operation parameter set (M-AP Coordination Operation Parameter Set) field is the sixth indication field.

In some embodiments, the second wireless frame may be a Beacon frame.

Step S43: when a third wireless frame sent by the third AP is received within the first time interval and the third wireless frame is used to indicate accepting the multi-AP coordination request, the multi-AP coordination operation is performed with the third AP; when the third wireless frame sent by the third AP is not received within the first time interval, or when the third wireless frame sent by the third AP is received within the first time interval and the third wireless frame is used to indicate rejecting the multi-AP coordination request, the multi-AP coordination operation is not performed with the third AP.

In some embodiments, after sending the second wireless frame, the second AP may determine whether the third wireless frame sent by the third AP is received within the first time interval.

The third AP is an AP receiving the second wireless frame, and the third wireless frame is used to respond to the multi-AP coordination request initiated by the second wireless frame, specifically to indicate acceptance or rejection of the multi-AP coordination request initiated by the second AP.

The third wireless frame may indicate accepting or rejecting the multi-AP coordination request through a seventh indication field.

As an example, when an identification value of the seventh indication field is a tenth value, the third wireless frame is used to indicate accepting the multi-AP coordination request; when the identification value of the seventh indication field is an eleventh value, the third wireless frame is used to indicate rejecting the multi-AP coordination request.

The tenth value and the eleventh value may be different values. For example, the tenth value may be 1 and the eleventh value may be 0, which is not limited herein.

Optionally, the third wireless frame may be a Beacon frame.

Optionally, the seventh indication field may be any information field or at least one bit in the third wireless frame.

If the second AP determines that the third wireless frame sent by the third AP is not received within the first time interval, the second AP does not perform the multi-AP coordination operation with the third AP; if the second AP determines that the third wireless frame sent by the third AP is received within the first time interval, the second AP determines whether the third AP accepts the multi-AP coordination request.

In some embodiments, if the second AP determines, according to the third wireless frame, that the third AP rejects the multi-AP coordination request, that is, the second AP determines that the third wireless frame is used to indicate rejection of the multi-AP coordination request initiated by the second AP, the second AP does not perform the multi-AP coordination operation with the third AP.

In some embodiments, if the second AP determines, according to the third wireless frame, that the third AP accepts the multi-AP coordination request, that is, the second AP determines that the third wireless frame is used to indicate acceptance of the multi-AP coordination request initiated by the second AP, the second AP performs the multi-AP coordination operation with the third AP.

The communication method involved in embodiments of the present disclosure may include the foregoing steps and at least one of the embodiments. For example, step S41 may be implemented as an independent embodiment, or steps S42 to S43 may be implemented as an independent embodiment, but are not limited thereto.

Based on the communication method provided in the present disclosure, cooperative operation among multiple APs may be established, providing a basis for realizing reasonable configuration of resources among multiple APs and improving spectrum utilization efficiency and network performance.

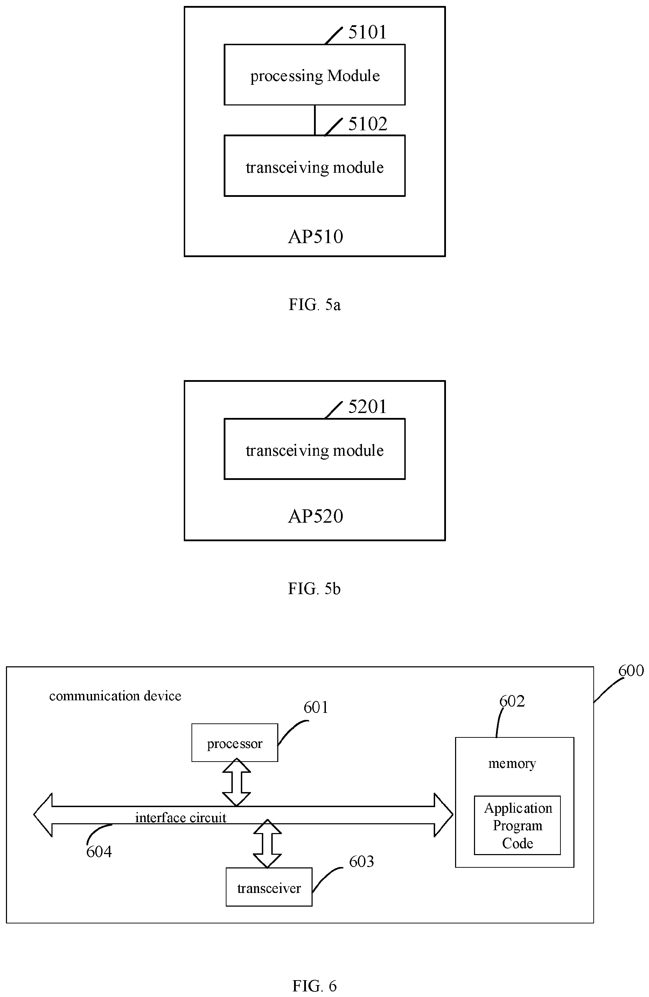

FIG. 5a is a schematic structural diagram of an AP provided in embodiments of the present disclosure. As shown in FIG. 5a, the AP 510 may include at least one of a processing module 5101, a Transceiving module 5102, and the like.

In some embodiments, the processing module 5101 is configured to determine a first wireless frame, where the first wireless frame indicates a multi-AP coordination operation capability of a first AP through at least one indication field; the Transceiving module 5102 is configured to send the first wireless frame.

Optionally, the processing module 5101 is configured to perform at least one of steps executed by the first AP in any of the foregoing methods (for example, step S31, but not limited thereto), which is not described herein again. The Transceiving module 5102 is configured to perform at least one of communication steps executed by the first AP in any of the foregoing methods (for example, step S21, step S32, but not limited thereto), which is not described herein.

FIG. 5b is another schematic structural diagram of an AP provided in embodiments of the present disclosure. As shown in FIG. 5b, the AP 520 may include at least one of a Transceiving module 5201 and the like.

In some embodiments, the Transceiving module 5202 is configured to receive a first wireless frame, where the first wireless frame indicates a multi-AP coordination operation capability of a first AP through at least one indication field.

Optionally, the Transceiving module 5202 is configured to perform at least one of communication steps executed by the second AP in any of the foregoing methods (for example, step S22, steps S42 to S43, but not limited thereto), which is not described herein.

Optionally, the AP 520 may further include a processing module 5202. The processing module 5202 is configured to perform at least one of steps executed by the second AP in any of the foregoing methods (for example, steps S23 to S26, steps S42 to S43, but not limited thereto), which is not described herein again.

It should be understood that the division of the above units or modules is merely a division of logical functions. In actual implementation, all or part of the units or modules may be integrated into one physical entity, or may be physically separated. In addition, the units or modules may be implemented in a form in which a processor invokes software; for example, including a processor, where the processor is connected to a memory, the memory stores instructions, and the processor invokes the instructions stored in the memory to implement any of the above methods or to implement functions of the above units or modules, where the processor is, for example, a general-purpose processor, such as a central processing unit (CPU) or a microprocessor, and the memory is an internal or external memory of a device. Alternatively, the units or modules in the device may be implemented in a form of hardware circuits, and part or all of the functions of the units or modules may be implemented through design of hardware circuits. The above hardware circuits may be understood as one or more processors; for example, in one implementation, the above hardware circuits are application-specific integrated circuits (application-specific integrated circuit, ASICs), and part or all of the functions of the units or modules are implemented through design of logical relationships of components in the circuits; for another example, in another implementation, the above hardware circuits are implemented by programmable logic devices (PLD), for example, field programmable gate arrays (FPGA), which may include a large number of logic gate circuits, and connections between the logic gate circuits are configured through configuration files, thereby implementing part or all of the functions of the units or modules. All units or modules of the above device may be implemented entirely in a form in which a processor invokes software, or entirely in a form of hardware circuits, or partially in a form in which a processor invokes software and the remaining part in a form of hardware circuits.

In the embodiments of the present disclosure, a processor is a circuit having signal processing capability. In one implementation, the processor may be a circuit having instruction reading and execution capability, for example, a central processing unit (CPU), a microprocessor, a graphics processing unit (GPU) (which may be understood as a microprocessor), or a digital signal processor (DSP), and the like; in another implementation, the processor may implement certain functions through logical relationships of hardware circuits, and the logical relationships of the above hardware circuits are fixed or reconfigurable, for example, the processor is a hardware circuit implemented by an application-specific integrated circuit (ASIC) or a programmable logic device (PLD), such as an FPGA. In reconfigurable hardware circuits, a process in which the processor loads configuration documents to implement configuration of hardware circuits may be understood as a process in which the processor loads instructions to implement part or all of the functions of the above units or modules. In addition, the processor may further be hardware circuits designed for artificial intelligence, which may be understood as ASICs, such as a neural network processing unit (NPU), a tensor processing unit (TPU), a deep learning processing unit (DPU), and the like.

FIG. 6 is a schematic structural diagram of a communication device proposed in embodiments of the present disclosure. The communication device 600 may be a first AP or a second AP, or may be a chip, a chip system, or a processor that supports the first AP or the second AP to implement any of the above methods. The communication device may be used to implement the methods described in the above method embodiments, and reference may be made to the descriptions in the above method embodiments for details.

As shown in FIG. 6, the communication device 600 includes one or more processors 601. The processor 601 may be a general-purpose processor or a dedicated processor, for example, may be a baseband processor or a central processor. The baseband processor may be configured to process communication protocols and communication data, and the central processor may be configured to control the communication device (for example, a base station, a baseband chip, a terminal device, a terminal device chip, a DU or a CU, and the like), execute programs, and process data of the programs. The communication device 600 is configured to execute any one of the above methods.

In some embodiments, the communication device 600 further includes one or more memories 602 for storing instructions. Optionally, all or part of the memory 602 may also be located outside the communication device 600.

In some embodiments, the communication device 600 further includes one or more transceivers 603. When the communication device 600 includes one or more transceivers 603, the transceiver 603 executes at least one of communication steps such as sending and/or receiving in the above methods (for example, steps S21 to S22, step S32, steps S41 to S42, but not limited thereto), and the processor 601 performs at least one of other steps (for example, steps S23 to S26, step S31, step S43, etc., but not limited thereto).

In some embodiments, the transceiver may include a receiver and/or a transmitter, and the receiver and the transmitter may be separated or may be integrated together. Optionally, terms such as transceiver, transceiving unit, transceiver apparatus, and transceiver circuit may be used interchangeably; terms such as transmitter, transmitting unit, transmitting apparatus, and transmitting circuit may be used interchangeably; and terms such as receiver, receiving unit, receiving apparatus, and receiving circuit may be used interchangeably.

In some embodiments, the communication device 600 may include one or more interface circuits 604. Optionally, the interface circuit 604 is connected to the memory 602, and the interface circuit 604 may be used to receive signals from the memory 602 or other devices, and may be used to send signals to the memory 602 or other devices. For example, the interface circuit 604 may read instructions stored in the memory 602 and send the instructions to the processor 601.

The communication device 600 in the above embodiment descriptions may be a first AP or a second AP; however, the scope of the communication device 600 described in the present disclosure is not limited thereto, and the structure of the communication device 600 is not limited by FIG. 6. The communication device may be an independent device or may be a part of a larger device. For example, the communication device may be: (1) an independent integrated circuit (IC), or a chip, or a chip system or subsystem; (2) a set including one or more ICs, and optionally, the above IC set may further include storage components for storing data and programs; (3) an ASIC, such as a modem; (4) a module that may be embedded in another device; (5) a receiver, a terminal device, an intelligent terminal device, a cellular phone, a wireless device, a handheld device, a mobile unit, a vehicle-mounted device, a network device, a cloud device, an artificial intelligence device, and the like; (6) others, and the like.

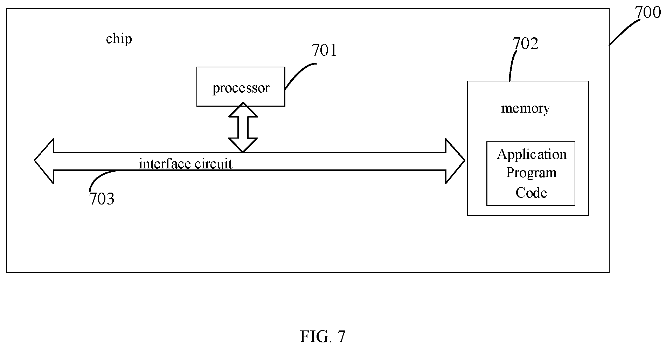

FIG. 7 is a schematic structural diagram of a chip 700 proposed in embodiments of the present disclosure. The chip 700 includes one or more processors 701, and the chip 700 is configured to execute any one of the above methods.

In some embodiments, the chip 700 further includes one or more interface circuits 703. Optionally, the interface circuit 703 is connected to a memory 702, and the interface circuit 703 may be used to receive a signal from the memory 702 or other devices, and the interface circuit 703 may be used to send a signal to the memory 702 or other devices. For example, the interface circuit 703 may read instructions stored in the memory 702 and send the instructions to the processor 701.

In some embodiments, the interface circuit 703 performs at least one of communication steps such as sending and/or receiving in the foregoing methods (for example, steps S21 to S22, step S32, steps S41 to S42, but not limited thereto), and the processor 701 performs at least one of other steps (for example, steps S23 to S26, step S31, step S43, and the like, but not limited thereto).

In some embodiments, terms such as interface circuit, interface, transceiving pin, and transceiver may be used interchangeably.

In some embodiments, the chip 700 further includes one or more memories 702 for storing instructions. Optionally, all or part of the memory 702 may be located outside the chip 700.

The present disclosure further proposes a storage medium, where the storage medium stores instructions, and when the instructions are executed on the communication device 600, the communication device 600 is caused to execute any one of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further proposes a program product, and when the program product is executed by the communication device 600, the communication device 600 is caused to execute any one of the above methods. Optionally, the program product is a computer program product.

The present disclosure further proposes a computer program, and when the computer program is executed on a computer, the computer is caused to execute any one of the above methods. The above descriptions are merely preferred embodiments of the present disclosure and explanations of the technical principles applied. Those skilled in the art should understand that the scope of disclosure involved in the present disclosure is not limited to the technical solutions formed by specific combinations of the above technical features, and should also cover other technical solutions formed by arbitrary combinations of the above technical features or equivalent features thereof without departing from the above disclosed concept. For example, technical solutions formed by replacing the above features with technical features having similar functions disclosed in the present disclosure (but not limited thereto).

## Claims

1. A communication method, comprising:
determining a first wireless frame, wherein the first wireless frame indicates a multi-AP coordination operation capability of a first access point AP through at least one indication field; and
sending the first wireless frame.

2. The method according to claim 1, wherein the first wireless frame indicates the multi-AP coordination operation capability of the first AP through a first indication field and a second indication field jointly, or the first wireless frame indicates the multi-AP coordination operation capability of the first AP through a third indication field.

3. The method according to claim 2, wherein when an identification value of the first indication field is a first value and an identification value of the second indication field is a second value, the first indication field and the second indication field are used to jointly indicate that the first AP supports coordinating other APs and does not support being coordinated by other APs;
when the identification value of the first indication field is the first value and the identification value of the second indication field is the first value, the first indication field and the second indication field are used to jointly indicate that the first AP supports coordinating other APs and supports being coordinated by other APs;
when the identification value of the first indication field is the second value and the identification value of the second indication field is the first value, the first indication field and the second indication field are used to jointly indicate that the first AP does not support coordinating other APs and supports being coordinated by other APs; and
when the identification value of the first indication field is the second value and the identification value of the second indication field is the second value, the first indication field and the second indication field are used to jointly indicate that the first AP does not support a multi-AP coordination operation.

4. The method according to claim 2, wherein the first wireless frame comprises an ultra-high reliability capability element field, the ultra-high reliability capability element field comprises an ultra-high reliability medium access control capability field, and the ultra-high reliability medium access control capability field comprises the first indication field and the second indication field.

5. The method according to claim 2, wherein when an identification value of the third indication field is a third value, the third indication field is used to indicate that the first AP supports a multi-AP coordination operation;
when the identification value of the third indication field is a fourth value, the third indication field is used to indicate that the first AP does not support the multi-AP coordination operation.

6. The method according to claim 5, wherein when the third indication field is used to indicate that the first AP supports the multi-AP coordination operation, the first wireless frame further comprises a fourth indication field;
when an identification value of the fourth indication field is a fifth value, the fourth indication field is used to indicate that the first AP supports coordinating other APs and does not support being coordinated by other APs;
when the identification value of the fourth indication field is a sixth value, the fourth indication field is used to indicate that the first AP does not support coordinating other APs and supports being coordinated by other APs; and
when the identification value of the fourth indication field is a seventh value, the fourth indication field is used to indicate that the first AP supports coordinating other APs and supports being coordinated by other APs.

7. The method according to claim 5, wherein the first wireless frame comprises a multi-AP coordination operation element field, the multi-AP coordination operation element field comprises a multi-AP coordination operation control field, and the multi-AP coordination operation control field comprises the third indication field.

8. The method according to claim 6, wherein the first wireless frame comprises a multi-AP coordination operation element field, the multi-AP coordination operation element field comprises a multi-AP coordination operation parameter set field, and a multi-AP coordination operation capability field in the multi-AP coordination operation parameter set field is the fourth indication field.

9. A communication method, comprising:
receiving a first wireless frame, wherein the first wireless frame indicates a multi-AP coordination operation capability of a first access point AP through at least one indication field.

10. The method according to claim 9, wherein the first wireless frame indicates the multi-AP coordination operation capability of the first AP through a first indication field and a second indication field jointly, or the first wireless frame indicates the multi-AP coordination operation capability of the first AP through a third indication field.

11. The method according to claim 10, wherein when an identification value of the first indication field is a first value and an identification value of the second indication field is a second value, the first indication field and the second indication field are used to jointly indicate that the first AP supports coordinating other APs and does not support being coordinated by other APs;
when the identification value of the first indication field is the first value and the identification value of the second indication field is the first value, the first indication field and the second indication field are used to jointly indicate that the first AP supports coordinating other APs and supports being coordinated by other APs;
when the identification value of the first indication field is the second value and the identification value of the second indication field is the first value, the first indication field and the second indication field are used to jointly indicate that the first AP does not support coordinating other APs and supports being coordinated by other APs; and
when the identification value of the first indication field is the second value and the identification value of the second indication field is the second value, the first indication field and the second indication field are used to jointly indicate that the first AP does not support a multi-AP coordination operation.

12. The method according to claim 10, wherein the first wireless frame comprises an ultra-high reliability capability element field, the ultra-high reliability capability element field comprises an ultra-high reliability medium access control capability field, and the ultra-high reliability medium access control capability field comprises the first indication field and the second indication field.

13. The method according to claim 10, wherein when an identification value of the third indication field is a third value, the third indication field is used to indicate that the first AP supports a multi-AP coordination operation;
when the identification value of the third indication field is a fourth value, the third indication field is used to indicate that the first AP does not support the multi-AP coordination operation.

14. The method according to claim 13, wherein when the third indication field is used to indicate that the first AP supports the multi-AP coordination operation, the first wireless frame further comprises a fourth indication field;
when an identification value of the fourth indication field is a fifth value, the fourth indication field is used to indicate that the first AP supports coordinating other APs and does not support being coordinated by other APs;
when the identification value of the fourth indication field is a sixth value, the fourth indication field is used to indicate that the first AP does not support coordinating other APs and supports being coordinated by other APs; and
when the identification value of the fourth indication field is a seventh value, the fourth indication field is used to indicate that the first AP supports coordinating other APs and supports being coordinated by other APs.

15. The method according to claim 13, wherein the first wireless frame comprises a multi-AP coordination operation element field, the multi-AP coordination operation element field comprises a multi-AP coordination operation control field, and the multi-AP coordination operation control field comprises the third indication field.

16. The method according to claim 14, wherein the first wireless frame comprises a multi-AP coordination operation element field, the multi-AP coordination operation element field comprises a multi-AP coordination operation parameter set field, and a multi-AP coordination operation capability field in the multi-AP coordination operation parameter set field is the fourth indication field.

17. The method according to claim 9, further comprising:
determining a second wireless frame, wherein the second wireless frame is used to initiate a multi-AP coordination request; and
sending the second wireless frame;
wherein the multi-AP coordination request is used to request that a third AP receiving the second wireless frame to participate in multi-AP coordination and to be coordinated, or the multi-AP coordination request is used to request a second AP sending the second wireless frame to participate in the multi-AP coordination and to request the third AP receiving the second wireless frame to coordinate the second AP.

18. The method according to claim 17, wherein the second wireless frame comprises a fifth indication field, when an identification value of the fifth indication field is an eighth value, the second wireless frame is used to request the third AP to participate in the multi-AP coordination and to be coordinated; when the identification value of the fifth indication field is a ninth value, the second wireless frame is used to request the second AP to participate in the multi-AP coordination and to request the third AP to coordinate the second AP.

19. The method according to claim 18, wherein the second wireless frame comprises a multi-AP coordination operation element field, the multi-AP coordination operation element field comprises a multi-AP coordination operation parameter set field, the multi-AP coordination operation parameter set field comprises a coordination request type subfield, and the coordination request type subfield is the fifth indication field.

20. The method according to claim 17, wherein the second wireless frame further comprises a sixth indication field, the sixth indication field is used to indicate a first time interval for receiving a third wireless frame, and the third wireless frame is used to indicate accepting or rejecting the multi-AP coordination request.

21. The method according to claim 20, wherein the second wireless frame comprises a multi-AP coordination operation element field, the multi-AP coordination operation element field comprises a multi-AP coordination operation parameter set field, the multi-AP coordination operation parameter set field comprises a coordination request timeout duration subfield, and the coordination request timeout duration subfield is the sixth indication field.

22. The method according to claim 20, further comprising:
when the third wireless frame is received within the first time interval and the third wireless frame is used to indicate accepting the multi-AP coordination request, performing a multi-AP coordination operation with the third AP;
when the third wireless frame is not received within the first time interval, or when the third wireless frame is received within the first time interval and the third wireless frame is used to indicate rejecting the multi-AP coordination request, not performing the multi-AP coordination operation with the third AP.

23. An AP, comprising:
a processing module, configured to determine a first wireless frame, wherein the first wireless frame indicates a multi-AP coordination operation capability of a first access point AP through at least one indication field; and
a transceiving module, configured to send the first wireless frame.

24. An AP, comprising:
a transceiving module, configured to receive a first wireless frame, wherein the first wireless frame indicates a multi-AP coordination operation capability of a first access point AP through at least one indication field.

25. An AP, comprising:
one or more processors;
wherein the AP is configured to perform the communication method according to any one of claims 1 to 8 or the communication method according to any one of claims 9 to 22.

26. A communication system, comprising a first AP and a second AP, wherein the first AP device is configured to implement the communication method according to any one of claims 1 to 8, and the second AP is configured to implement the communication method according to any one of claims 9 to 22.

27. A storage medium, the storage medium storing instructions, wherein when the instructions are executed on a communication device, the communication device is caused to perform the communication method according to any one of claims 1 to 22.
